# EUROPÄISCHE PATENTANMELDUNG

(11) **EP 1 254 764 A2**
(43) Veröffentlichungstag der Anmeldung: **06.11.2002**
(21) Anmeldenummer: 02100429.6
(22) Anmeldetag: 30.04.2002
(51) Int. Cl.: B32B 3/10, B32B 15/08, E04F 13/08, E04B 9/00

(54) **Dekorplatte, insbesondere als Deckenelement**

(30) Priorität: 04.05.2001 AT 3502001 U
(71) Anmelder: Sibu Design GmbH & Co KG, 4452 Ternberg (AT)
(72) Erfinder: Kurzmann, Kurt, 4400, Steyr (AT)
(74) Vertreter: Müllner, Erwin, Dr.

(57) **Zusammenfassung**

Eine Dekorplatte, insbesondere als Deckenelement für abgehängte Sichtdecken, umfasst eine Grundplatte (1) aus Aluminium in einer Stärke von 0,75 bis 2 mm, vorzugsweise 1 mm. Diese Grundplatte (1) ist gelocht. Eine Flachseite trägt eine mehrschichtige Spiegelfolie (2) mit einer Trägerfolie (3) aus Polyestermaterial einer Stärke von 100 bis 300 µm, vorzugsweise 200 µm. Darauf ist mit einer Stärke von unter 1 µm eine spiegelnde Metallisierung (4) aufgedampft. Als Schutzschicht kann eine kristallklare Polyesterfolie (5) darüber gelegt sein. Diese mehrschichtige Spiegelfolie (2) kann thermisch verbunden und mit Hilfe eines Klebers auf der Grundplatte (1) aufgebracht sein. In den Löchern (6) bildet die Spiegelfolie (2) eine Wölbung.

## Beschreibung

Die Erfindung betrifft eine Dekorplatte, insbesondere als Deckenelement für abgehängte Sichtdecken, mit einer gelochten Grundplatte und mit einer hinterlegten Spiegelfolie, die im Bereich der Lochungen gewölbt ausgebildet ist.

Es sind Mehrschichtplatten aus Kunststoff bekannt, die zur Dekoration von Sichtflächen von Möbeln, Raumwänden oder als Deckenelement Verwendung finden. Während es etwa bei Tischplatten in erster Linie auf die Widerstandsfähigkeit solcher Platten ankommt, stehen bei Dekorplatten andere Kriterien im Vordergrund, wobei neben der Erzielung eines besonderen Effekts dennoch Pflegeleichtigkeit und gute Verarbeitbarkeit, z.B. Anpassbarkeit an Krümmungen, im Vordergrund stehen. Auch der Brandschutz spielt eine gewisse Rolle.

In diesem Sinn zählen etwa Spiegelreflexfolien zum Stand der Technik, die auf einer Trägerfolie eine spiegelnde Metallisierung und über dieser einen kristallklaren Überzug aufweisen. Die Spiegelreflexfolie kann durch Einschnitte, die einen Teil der Trägerfolie durchsetzen, besonders flexibel ausgebildet sein. Sie erhält dadurch die Erscheinungsform eines Mosaiks.

Spiegelfolienstreifen werden ferner sehr häufig zwischen Wandpaneelen oder zwischen einer Schiffbodenwandverkleidung über einer Feder- und Nutverbindung eingesetzt. Damit wird eine Abdeckung und eine besonders augenfällige Strukturierung der Wandverkleidung erreicht.

Deckenelemente werden als beispielsweise quadratische Mehrschichtplatten aus Kunststoff hergestellt und in einen von der Raumdecke (Konstruktionsdecke) abgehängten Gitterrost aus Aluminiumprofilen eingesetzt. Solche Deckenelemente wurden als Lochplatten hergestellt, wenn die Luft vom Luftführungskanälen im Zwischenraum zwischen der Konstruktionsdecke und der abgehängten Decke gleichmäßig in den darunter liegenden Raum verteilt werden soll. Um eine Formstabilität zu erreichen, hat man die Dekorplatten auch bereits wannenartig verformt. Bei allen vorgenannten Kunststoff-Verbundplatten, die in Horizontallage frei aufgehängt sind, besteht im Brandfall erhöhte Gefahr. Bei Hitzeentwicklung verformen sich diese als Deckenelemente eingesetzten Dekorplatten sehr rasch und fallen allenfalls brennend aus ihrer nur randseitig übergreifenden Halterung. Dies trifft insbesondere auch für Dekorplatten mit einer gelochten Grundplatte und einer hinterlegten Spiegelfolie zu, die im Bereich der Lochungen gewölbt ausgebildet ist. Solche Dekorplatten sind infolge der Lochungen besonders leicht jedoch gleichzeitig fest genug, um unter normalen Bedingungen als Deckenelement eingesetzt werden zu können.

Die Erfindung zielt darauf ab, einer Dekorplatte der vorgenannten Art mit verbesserten mechanischen Eigenschaften gleichzeitig eine höhere Feuersicherheit zu verleihen. Dies wird dadurch erreicht, dass die Grundplatte eine brandschützende Aluminiumplatte mit einer Stärke von 0,75 bis 2 mm ist, und dass die hinterlegte Spiegelfolie zur Reduktion des Gesamtgewichtes und Vermeidung feuergefährlicher Volumina einen Mehrschichtaufbau aus einer transparenten, gegebenenfalls eingefärbten Polyesterfolie der Stärke zwischen 8 bis 50 µm, vorzugsweise 12 µm, einer Metallisierung z.B. mit Aluminium im Bereich unter 1 µm und eine gegebenenfalls transparente Trägerfolie für die Metallisierung aus Polyestermaterial einer Stärke von 100 bis 500 µm, vorzugsweise von 200 µm, aufweist. Die Aluminiumplatte erhält beispielsweise eine gebürstete seidenmatt glänzende Oberfläche, die durch die in der Lochung sichtbare linsenartig gewölbte, spiegelglatte metallisierte Polyesterfolie einen besonderen Effekt bei gleichzeitig erhöhtem Brandschutz erbringt. Es sind nur Metallteile bzw. metallisierte Oberflächen der Raumseite zugewandt. Die Wölbung der metallisierten Spiegelfolie in den Lochungen kann eine Höhe erreichen, die der Materialstärke der gelochten Grundplatte entspricht. Der besondere weitere Vorteil des erfindungsgemäßen Mehrschichtaufbaues, insbesondere hinsichtlich der Lochung in der Aluminiumplatte, liegt darin, dass die Ränder der gestanzten Lochung ebenfalls silbrig erscheinen und diese nicht - wie etwa bei üblichen oberflächlich eingefärbten Polystyrolfolien, eine dunkle Umrandung bilden. Die Wölbung der hauchdünnen, verspiegelten, also metallisierten Polyesterfolie wird bei der Herstellung des Verbundmaterials durch rückseitige Druckeinwirkung erreicht. Die Dehnung bleibt als Wölbung in der Lochung erhalten. Die Lochung kann kreisförmig, elliptisch oder mit einer polygonen Berandung ausgebildet sein.

Die erfindungsgemäßen Dekorplatten können brandschützend, z.B. im Küchen, an Möbeln, Wänden, jedoch vorzugsweise als Deckenelemente verwendet werden.

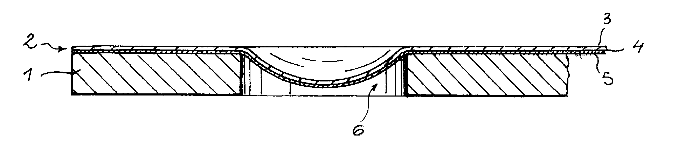

In der Zeichnung ist ein Querschnitt durch ein Teilstück einer erfindungsgemäßen Dekorplatte vergrößert und schematisch dargestellt.

Eine Dekorplatte, die als Wandverkleidung, architektonisches Element im Möbelbau (z.B. für Rückwände) sowie als Deckenelement z.B. für abgehängte Sichtdecken eingesetzt werden kann, umfasst eine Grundplatte 1 aus Leichtmetall, hier Aluminium. Diese Platte hat beim Ausführungsbeispiel eine Stärke von 1 mm. Auf nur einer Flachseite ist eine Spiegelfolie 2 aufgeklebt, die einen Mehrschichtaufbau aufweist. Eine Trägerfolie 3 aus Polyestermaterial hat eine Stärke von 200 µm und ist durch Bedampfen verspiegelt. Die Bedampfung kann mit Aluminium aber auch Kupfer oder dergleichen erfolgen, um eine neutrale oder farborientierte Verspiegelung zu erreichen. Die Spiegelschicht bzw. Metallisierung 4 hat eine Stärke von unter 1 um. Darüber ist hier eine hauchdünne, hochtransparente Polyesterfolie 5 von 12 µm zum Schutz der Metallisierung 4 und für deren dauerhaften Glanz vorgesehen. Auch diese schützende Polyesterfolie kann eingefärbt sein. Die Verbindung der Schichten bzw. Folien erfolgt auf thermischem Weg bzw. durch bekannte Kleber, die auch für die Verbindung der gesamten mehrschichtigen Spiegelfolie 2 mit der Aluminiumplatte 1 eingesetzt werden. Das Ausführungsbeispiel zeigt ein hier beispielsweise kreisrundes Loch 6 in der als Lochblech ausgebildeten Grundplatte 1. Die das Loch 6 überspannende Spiegelfolie 2 ist im Loch konvex gewölbt. Diese Wölbung wird beim Aufbringen durch Druck von oben erzeugt. Die Wölbung ist irreversibel.

Der Kunststoffanteil wurde gegenüber herkömmlichen Dekorplatten für diese Zwecke entscheidend reduziert und die physikalischen Eigenschaften wie Tragfähigkeit und Formstabilität der Aluminiumplatte (Leichtmetallplatte) überantwortet. Dadurch kann ein extrem leichtes und brandgeschütztes Deckenelement hergestellt werden.

Die Deckenelemente können quadratisch mit z.B. 50 cm Seitenlänge sein und mit Löchern von 12 mm Durchmesser in einem Rasterabstand von 5 cm zueinander ausgeführt sein.

## Patentansprüche

1. Dekorplatte, insbesondere als Deckenelement für abgehängte Sichtdecken, mit einer gelochten Grundplatte und mit einer hinterlegten Spiegelfolie, die im Bereich der Lochungen gewölbt ausgebildet ist, **dadurch gekennzeichnet, dass** die Grundplatte (1) eine brandschützende Aluminiumplatte mit einer Stärke von 0,75 bis 2 mm ist, und dass die hinterlegte Spiegelfolie (2) zur Reduktion des Gesamtgewichtes und Vermeidung feuergefährlicher Volumina einen Mehrschichtaufbau aus einer transparenten, gegebenenfalls eingefärbten Polyesterfolie der Stärke zwischen 8 bis 50 µm, vorzugsweise 12 µm, einer Metallisierung (4) z.B. mit Aluminium im Bereich unter 1 µm und eine gegebenenfalls transparente Trägerfolie (3) für die Metallisierung (4) aus Polyestermaterial einer Stärke von 100 bis 500 µm, vorzugsweise von 200 µm, aufweist.
